# EUROPÄISCHE PATENTSCHRIFT

(11) **EP 0 952 092 B1**
(45) Veröffentlichungstag und Bekanntmachung des Hinweises auf die Patenterteilung: **09.08.2006**
(21) Anmeldenummer: 99107939.3
(22) Anmeldetag: 22.04.1999
(51) Int. Cl.: B65D 81/26, B32B 7/12, B32B 27/10, B29C 65/00, D04H 1/66, B31D 1/04, D04H 13/00

(54) **Saugfähige Verbundschicht**
Absorbent multilayered structure
Structure absorbante multicouche

(30) Priorität: 24.04.1998 DE 19818398
(43) Veröffentlichungstag der Anmeldung: 27.10.1999
(73) Patentinhaber: Papierwerk Sundern GmbH, 59846 Sundern (DE)
(72) Erfinder: Gosztola, Reinhard, 59846 Sundern OT Endorf (DE)
(74) Vertreter: Maxton, Alfred

(56) Entgegenhaltungen:
- EP-A- 0 241 263
- WO-A-98/52745
- US-A- 4 410 578
- US-A- 4 935 282

## Beschreibung

Die Erfindung betrifft ein Verfahren zur Herstellung einer saugfähigen Verbundschicht, insbesondere Verbundschicht als Unterlage für die Verpackung und/oder Aufbewahrung von Lebensmitteln.

Die Verwendung gattungsgemäßer saugfähiger Verbundschichten bezweckt, die aus Lebensmitteln während des Transportes oder der Lagerung austretende Gewebeflüssigkeit aufzusaugen. Umgekehrt ist es ebenfalls möglich, mit einer angefeuchteten Verbundschicht die verpackte Ware vor dem Austrocknen zu schützen. Hierzu wird eine Verbundschicht in einem flüssigkeitsdichten Untersatz eingelegt und auf die Verbundschicht das zu verpackende Lebensmittelgut gelagert.

Aus dem Gebrauchsmuster G 70 46 539 ist eine gegenüber Fleisch chemisch inerte, saugfähige Verbundschicht bekannt, die aus zusammendrückbarem, weichem Material besteht. Die Verbundschicht besteht aus mehreren stellenweise miteinander verpreßten Schichten aus Vlies, die miteinander verleimt sind. Das Vlies ist vorzugsweise aus Zellstoffwatte. Diese Verbundschicht weist eine Trennlage auf, die flüssigkeitsdurchlässig, jedoch weniger saugfähig ist. Die Trennlage dient als Auflagefläche für das Fleisch, wobei die vom Fleisch abgegebene Flüssigkeit von der Auflagefläche nach unten durchgelassen und vom Vlies aufgenommen wird. Andererseits ist auch in umgekehrter Richtung das Austreten aus dem Vlies durch die Auflagefläche zum Fleisch möglich. Dabei gelangt die Flüssigkeit, die bereits vom Vlies aufgesaugt wurde, wieder an das Fleisch.

Es hat sich gezeigt, daß die Verbundschicht an der mit ihr in Berührung gekommenen Oberfläche des Fleisches anhaftet, wenn das Fleisch nach einiger Zeit umgepackt oder aber bei seinem Verbraucher ausgepackt werden soll. Bei der Entfernung der Verbundschicht vom Fleisch kann dieses nun zerreißen und die einzelnen Schichten können sich voneinander lösen, da sich infolge des Aufsaugens des Fleischsaftes die Klebeverbindungen gelöst haben. Es besteht nunmehr keine Verbindung zwischen den einzelnen Schichten und der Unterlage, auf der das Fleisch liegt. Beim Versuch, die Verbundschicht vom Fleisch abzuziehen, muß daher jede einzelne Schicht für sich abgezogen werden, wobei diese in sich meist nochmals reißen. Dies führt zu einem lästigen stückweisen Entfernen der einzelnen Schichten. Darüber hinaus ist auch die Unterlage, auf der das Fleisch liegt, als einzelne Schicht nur schwer von der Fleischseite-entfernbar. Obwohl diese Schicht aus Pergamin besteht, saugt sie sich doch voll und quillt an. Auch diese Schicht kann beim Entfernen in sich reißen, so daß einzelne Reste der Unterlage am Fleisch kleben bleiben.

Um diese Verbundschicht zu verbessern, ist eine Unterlage sowie ein Verfahren zu dessen Herstellung aus der US-4 207 367 bekannt, wonach nicht gewebtes oder gewirktes, in sich verbundenes, saugfähiges Material aus regellos angeordneten, vermischten Zellulosefasern erzeugt wird. Bei der Herstellung dieses Materials werden die gegensätzlichen Oberflächen eines mit regellos angeordneten Zellulosefasern hergestellten Blattes angefeuchtet und zur Bildung eines Musters geprägt und ein Klebemittel auf die gemusterte Oberfläche aufgebracht und fixiert. Das Klebemittel ist vorzugsweise ein quervernetztes acrylisches Latex, das in flüssiger Form durch Spritzpistolen aufgebracht wird. Das Blatt wird nachfolgend in eine Heizkammer zum Trocknen befördert und danach wird das Klebemittel ausgehärtet. Das Blatt besteht aus porösen Bereichen, die etwa 70% des geprägten Oberflächenbereiches aufweisen. Das Klebemittel bildet eine Schicht, die teilweise die porösen Bereiche durchdringt. Die porösen Bereiche bilden definierte Flüssigkeitsspeicher. Bei der Verwendung dieses Materials zur Lagerung von Lebensmitteln liegen diese auf der Klebeschicht auf. Durch die Oberflächenmuster kann die Gewebeflüssigkeit, die aus den Lebensmitteln austritt, in die definierte Flüssigkeitsspeicher eindringen. Dabei quillt das Blatt auf. Die Oberfläche wird dabei gedehnt.

Als Nachteil wirkt sich dabei aus, daß die Oberflächenschicht an den gemusterten Stellen auseinanderquillt. An diesen Stellen bleibt das Blatt an den Lebensmitteln kleben. Die im Inneren ungebunden bleibenden hochporösen Bereiche, welche nicht durch Klebemittel fixiert sind, können an diesen Stellen nach außen treten und am Lebensmittel hängen bleiben. Auf diese Art und Weise bleiben stets Reste von Zellulosefasern auf der Oberfläche der Lebensmittel hängen.

Um zu verhindern, daß das Fleisch mit dem einmal abgegebenen Saft erneut in Berührung kommt und die vorgenannten Nachteile ausbleiben, ist aus der EP 241 263 eine saugfähige Verbundschicht bekannt, die eine äußere PE-Schicht mit saugfähigen Zelluloseschichten verbindet. Hierzu wird ein thermoplastisches Material in flüssiger Form an druckverbundenen Stellen der Schichten aufgebracht und von den saugfähigen Schichten aufgesaugt, damit diese und die PE-Schicht an den Stellen miteinander verbunden sind. Die PE-Schicht hält das Lebensmittel von der saugfähigen Schicht getrennt. Aus dem Lebensmittel entweichende Flüssigkeit kann von der PE-Schicht ablaufen und wird in dem flüssigkeitsdichten Untersatz aufgefangen. Die unter der PE-Schicht liegenden saugfähigen Schichten berühren unmittelbar den Boden des Untersatzes und saugen die Flüssigkeit auf. Hierdurch wird verhindert, daß Flüssigkeit wieder an das Lebensmittel gelangt, nachdem sie einmal aufgesaugt ist.

Nachteil dieser Verbundschicht ist, daß beim Verbinden der Schichten bei der Herstellung der Verbindungsstellen auf der äußeren PE-Schicht diese durch Beaufschlagung durch Druck, beispielsweise durch Stempeln eines Stempelrades, verletzt werden kann. Viel größer noch ist die Gefahr, daß beim Auftrag des thermoplastischen Materials in flüssigem Zustand, der gleichzeitig mit erheblicher Wärmeentwicklung verbunden ist, Hitze zur PE-Schicht geleitet wird, wodurch die PE-Schicht schmilzt. Durch Verletzungen der PE-Schicht, insbesondere auch durch Strukturveränderungen bei dem Kontakt mit heißem Material, ist der problemlose Einsatz der Verbundschicht als saugfähige Unterlage für Lebensmittel nicht sichergestellt.

In US-A-4 935 282 ist eine saugfähige Verbundschicht offenbart, welche eine Trennlage und eine mit der Trennlage verklebte Sauglage aufweist. Bei der Herstellung dieser Verbundschicht werden in mindestens einem Fügeschritt eine äußere Schicht zur Anlage an ein Lebensmittel und zumindest eine Verbindungsschicht zu der Trennlage verbunden. Anschließend wird in einem Klebeschritt die Trennlage mit der zumindest eine saugfähige Schicht aufweisenden Sauglage verbunden. Die US-A-4 935 282 offenbart sämtliche Merkmale nach dem Oberbegriff des Anspruchs 1.

US 4,609,420 offenbart die Verwendung von Dispersionsklebern zur Verbindung von Polymerfilmen miteinander oder aber zur Aufbringung von Polymerfilmen auf Holz, Metallen oder Kunststoffen.

Aufgabe der Erfindung ist es ein Verfahren zur Herstellung einer saugfähigen Verbundschicht zu schaffen, welche problemlos für die Verpackung und/oder Aufbewahrung von Lebensmitteln einsetzbar ist, die große Flüssigkeitsmengen aufsaugen kann und dabei dennoch ihren inneren Verbund beibehält.

Die Aufgabe wird gemäß der Erfindung durch ein Verfahren nach Anspruch 1 gelöst.

Art und Weise eine saugfähige Verbundschicht hergestellt werden, wobei mindestens eine Trennlage mit einer Sauglage mittels eines Dispersionsklabers verbunden wird. Die Sauglage aus saugfähigem Material ist somit über die Klebebereiche unmittelbar mit der Verbindungsschicht der Trennlage verbunden. Durch die Klebung ist es möglich, eine Verbindung von Sauglage und Trennlage zu schaffen, wobei auf eine Hitzebehandlung der Lagen beim Herstellen der Verbundschicht verzichtet werden kann. Durch die Hitze wäre die Folie der Gefahr ausgesetzt, Schmelzverletzungen oder Veränderungen in der Struktur zu erfahren. Durch Verkleben wird diese Gefahr vollständig ausgeschlossen. Die Klebung ist eine schonende Technik zur Verbindung der Trennlage mit der Sauglage.

Die erfindungsgemäße Herstellung erfolgt in mehreren Schritten. Zunächst wird in mindestens einem Fügeschritt eine äußere Schicht zur Anlage an das Lebensmittel mit einer Verbindungsschicht zu einer Trennlage verbunden. In einer vorteilhaften Ausgestaltung der Erfindung werden dazu zwei unterschiedliche Schichten aus verschiedenen Polyethylenen (PE) zusammengefügt. Dies kann durch herkömmliches Coexdrudieren aber auch durch andere bekannte Verfahren zur Verbindung von Kunststoffen der beiden PE-Schichten erfolgen, wobei die Grundstoffe der Folien getrennt erhitzt und schichtweise blasgeformt werden, so daß sie miteinander verbunden sind. Auf diese Weise wird eine haltbare Verbundschicht hergestellt, die auf jeder Seite individuelle Vorteile aufweist. Während die äußere Schicht der Trennlage mit Gleit- und/oder Antiblockmitteln verarbeitet werden kann, um damit ein Verblocken der Folie bei der Verarbeitung zu verhindern, ist die Verbindungsschicht gleit- und antiblockmittelfrei um eine optimale Haftung für den Klebstoff zu gewährleisten.

Die Trennlage wird auf der Seite der Verbindungsschicht mit einer Koronabehandlung bearbeitet. Dabei werden an molekularen Bruchstellen der Polyethylen-Oberfläche Molekülketten sehr schnell oxidiert. Die Oxidation führt zu verschiedenen funktionellen Gruppen an der Oberfläche der PE-Schicht, die alle zur Erhöhung der Oberflächenenergie beitragen. Die Oxidation wird dabei von in der Korona entstandenen Sauerstoff-Radikalen erzeugt. Die so vorbehandelte Oberfläche bindet folglich leichter mit einem erfindungsgemäßen Dispersionsklebstoff zur Verbindung der Trennlage mit der Sauglage.

Vorteilhaft ist eine Ausgestaltung des Verfahrens, bei dem eine Sauglage auf beiden Seiten mit einer Trennlage verbunden wird. Auf die Sauglage wird auf beide Seiten Dispersionskleber aufgetragen. An die Sauglage werden auf jeder Seite mit der Verbindungsschicht zur Sauglage Trennlagen angelegt. Die so zusammengelegten Lagen werden durch Andruckrollen geführt. Dabei werden die Verbindungsschichten der Trennlagen mit der Sauglage verklebt. Zwischen den Trennlagen kann im Umfang vom Rand der Verbundschicht Flüssigkeit in die Sauglage einziehen. Des weiteren ist vorgesehen, daß die Klebung von Trennlage und Sauglage wasserunlöslich ist, damit die Verbundschicht nach einem Aufsaugen von Flüssigkeit beim Gebrauch an einem Lebensmittel nicht den inneren Verbund verliert.

Erfindungsgemäß wird Dispersionsklebstoff zur Klebung der Lagen eingesetzt. Bei der Verwendung von Dispersionsklebstoff hat es sich gezeigt, daß der Klebeeffekt aufgrund der charakteristischen Filmbildung für die Durchdringung der saugfähigen Schichten der Sauglage besonders geeignet ist. Einerseits diffundiert der wasserhaltige Film durch den Zellstoff. Andererseits erfolgt durch die Filmbildung eine mechanische Verankerung in dem Zellstoffmaterial, nachdem Absorptionskräfte eine Bindung zwischen Zellstoffoberfläche und Dispersionsteilchen erzeugt haben. Der gleiche Effekt kann an der Oberfläche der Verbindungsschicht genutzt werden, indem Absorptionskräfte die Bindung zur Oberfläche der Verbindungsschicht aufbauen. Dieser Effekt wird hier auf einer mit Korona behandelten Oberfläche verstärkt. Durch die Filmbildung erfolgt wiederum eine mechanische Verankerung. Die für Dispersionsklebstoff charakteristische Filmbildung kommt dabei dadurch zustande, daß die Dispersionsteilchen bei Anwesenheit von Wasser ineinanderfließen und beim Austrocknen des Klebstoffes zueinander Haftkräfte aufbauen, wodurch der Klebeffekt hervorgerufen wird.

Als ein bevorzugter Dispersionsklebstoff wird eingesetzt ein wässriger, nicht selbstvernetzender Dispersionsklebstoff, der aus mehreren co- und/oder terpolymeren Dispersionen auf der Basis von Ethylen-Vinylacetat, Ester der Acrylsäure und Acetat-Versatat formuliert ist. In einer Weiterbildung ist die Sauglage aus mehreren Schichten aufgebaut. Hierzu wird ein Band Zellstoffwatte, das vorzugsweise von einer Rolle abgerollt wird, in einzelne Schichten doubliert und die Schichten über Umlenkrollen zusammengefügt. Als vorteilhaft hat sich erwiesen, den Dispersionsklebstoff auf die Zellstoffwatte zu geben. Hierzu wird erfindungsgemäß der flüssige Dispersionsklebstoff über Auftragdüsen auf eine Schicht aufgetragen. Möglich ist allerdings auch, mehrere Schichten der Zellstoffwatte nach dem Doublieren zu beauftragen. Danach wird die Zellstoffwatte über eine Ruhestrecke geführt, auf der sie nicht bearbeitet wird. Auf dieser Ruhestrecke diffundiert der Dispersionsklebstoff in die tieferen Bereiche des Zellstoffs hinein, so daß die Festigkeit der Klebung durch eine Benetzung einer größeren Zellstoffoberfläche erreicht wird.

Um weitere saugfähige Schichten, die nicht unmittelbar mit Dispersionsklebstoff beauftragt sind, mit einer benetzten saugfähigen Schicht zu verbinden, die Klebstoff aufweist bzw. mit der Verbindungsschicht der Trennlage zu verkleben, werden die Trenn- und Sauglage über Andruckrollen geführt, deren Andruckkraft auf die Materialien abgestimmt ist, um Materialbeschädigungen zu vermeiden. Es ist jedoch auch möglich, alle Zellstoffschichten der Sauglage gemeinsam zu pressen, um diese mit dem Dispersionsklebstoff, der auf die erste Schicht aufgetragen ist, in Berührung zu bringen, und erst anschliessend die so zusammengefügte Sauglage auf die Verbindungsschicht der Trennlage aufzukleben. Hierzu wird die Sauglage nach dem Auftragen des Dispersionsklebstoffs durch Andruckrollen geführt und mit der Trennlage verklebt. Dabei ist vorteilhafterweise eine kalte Prägeklebung vorgesehen.

Eine vorteilhafte Ausgestaltung der Erfindung wird dadurch erreicht, daß die Prägungen punktförmig, vorzugsweise gradlinig, aufgebracht werden. Punktförmige Prägung erfolgt dabei vorzugsweise mit einem Zahnrad oder einem Prägekalander. Die linienförmige Prägung wird bevorzugt mit einer Scheibe als Andruckrolle erreicht. Hierbei werden Linien von Klebstoff auf die Zellstoffwatte aufgetragen und die Sauglage mit der Trennlage verbunden.

In einer Weiterbildung der Erfindung wird die äußere Schicht aus Low Density Polyethylen (LDPE) hergestellt. Daneben ist für die Verbindungsschicht vorzugsweise ein LDPE vorgesehen. Um die Trennlagen farbig auszugestalten, werden wischen die äußere Schicht und die Verbindungsschicht eine Farbschicht eingebracht. Hierzu ist vorzugsweise ein High Density Polyethylen (HDPE) mit einem Farbzusatz aus beispielsweise TiO₂ vorgesehen. Die äußere und die Verbindungsschicht sollen im wesentlichen einen Anteil an der Gesamtdikke der Trennlage von ca. 25% aufweisen, so daß die Farbschicht bis zu 50% der Materialdicke annehmen kann. Dichteunterschiede innerhalb der Schichten der Trennlage können verarbeitungsbedingt entstehen. Für die Anwendung in einer saugfähigen Verbundschicht aus unterschiedlichen Polyethylenen mit verschiedenen Anforderung, nämlich eine flüssigkeitsabweisende Eigenschaft der Trennlage und die Saugfähigkeit der Sauglage, die an sich eine Gleichbehandlung mit chemischen Klebstoffen schwierig gestalten, ist erfindungsgemäß vorgesehen, für die Verbindungsschicht der Trennlage gleit-und antiblockmittel- freies PE zu verwenden. Dabei ist wünschenswert, die äußere Schicht mit Gleit- und Antiblockmitteln zu verarbeiten, damit die Folie bzw. die Verbundschicht beim Verarbeiten nicht verblockt. Hierbei zeigt sich die besonders vorteilhafte Ausgestaltung mit einer äußeren Schicht der Trennlage.

Als besonders vorteilhaft hat sich daher eine Ausgestaltung der Erfindung erwiesen, bei der die Trennlage gegen Flüssigkeitsdurchtritt dicht und vorzugsweise flüssigkeitsabweisend ist. Hierbei wird der Effekt, daß die Flüssigkeit von der Trennlage abfließen kann, unterstützt. Flüssigkeit bleibt nicht auf der Trennlage und trocknet an, so daß das Lebensmittel auf der Trennlage durch die eigene Gewebeflüssigkeit festklebt. Die von der Trennlage abgelaufene Flüssigkeit kann von der Sauglage am Untersatz der Verpackung aufgesaugt werden. Vorteilhafterweise tritt die Flüssigkeit nicht wieder an die Oberfläche des Lebensmittels.

Es hat sich weiter als vorteilhaft erwiesen, eine Sauglage aus Zellstoffwatte, vorzugsweise aus mehreren Schichten einzusetzen. Das gewünschte Saugvolumen ist dabei vorteilhafterweise von der Anzahl der Schichten in der Sauglage abhängig. Das erfindungsgemäße Verfahren ermöglicht auch mehrere Sauglagen einzusetzen. Die einzelnen Schichten der Sauglage werden mit Dispersionskleber verbunden. Hierdurch wird insbesondere mit der oberflächenbehandelten Verbindungsschicht eine gute Haftung der Trennlage an der Sauglage erreicht.

Die Erfindung wird im folgenden anhand von Zeichnungen erläutert. Es zeigen:
- Fig. 1: den Verfahrensablauf anhand einer Vorrichtung zur Herstellung von saugfähigen Verbundschichten mit einer Trennlage kaschiert,
- Fig. 2: den Verfahrensablauf anhand einer Vorrichtung zur Herstellung von saugfähigen Verbundschichten mit zwei Trennlagen kaschiert,
- Fig. 3: den Aufbau von Andruckrollen zur Verwendung in einer solchen Vorrichtung,
- Fig. 4: den Aufbau einer saugfähigen Verbundschicht,
- Fig. 5: den Vorgang der Herstellung einer Trennlage.

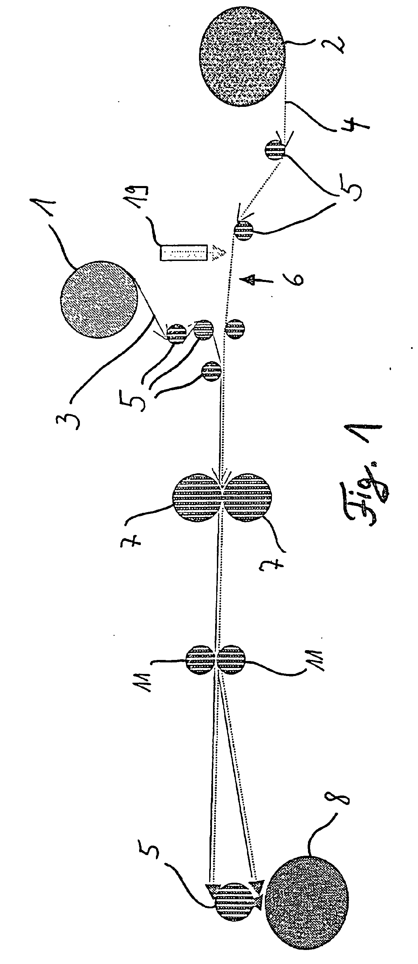

In Fig. 1 ist eine Vorrichtung zur Herstellung einer saugfähigen Verbundschicht dargestellt, die Materialrollen 1, 2 zeigen, auf denen einerseits die Trennlage 3 und andererseits die Zellstoffwatte 4 aufgerollt sind. Derartige Materialrollen werden insbesondere für den Transport und die Lagerung von bandförmigem Material genutzt. Die Trennlage 3 und die Zellstoffwatte 4 sind entsprechend bandförmig auf den Rollen aufgebracht und werden zur Verarbeitung in dem vorgesehenen Maße von den Rollen abgerollt. Die Materialbänder werden über Umlenkrollen 5 und Andruckrollen 7 über eine Messerstation 11 auf eine Fertigrolle 8 geführt. Dabei wird die Zellstoffwatte als Sauglage 4 vor der Andruckrolle 7 von einer Auftragungsanlage 19 mit Dispersionskleber beauftragt. Auf einer Ruhestrecke 6 kann der Dispersionskleber in die Sauglage 4 diffundieren. Nach der Ruhestrecke wird die Trennlage 3 über die Sauglage 4 gelegt und an der Andruckrolle 7 miteinander verpreßt. Das zusammengepreßte Band wird weiter über Umlenkrollen geführt und kann vorzugsweise innen und/oder außen kaschiert auf Fertigrollen aufgerollt werden.

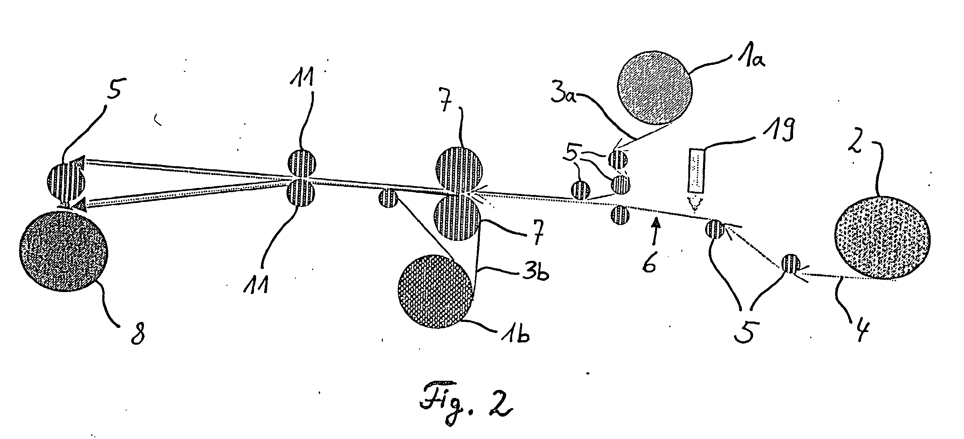

In Fig. 2 ist ein Verfahren gemäß Fig. 1 dargestellt, in welchem die Verbundschicht mit einer zusätzlichen Trennlage 3b verbunden wird. Das Material der Sauglage 4 wird von der Fertigrolle 2 über Umlenkrollen 5 geführt und wird von einer Auftragungsanlage 19 für Dispersionskleber mit Dispersionskleber versehen. Danach wird die Sauglage 4 über eine Ruhestrecke 6 geführt. Eine Trennlage 3a wird auf die Sauglage 4 gelegt. Die Trennlage 3a wird dazu von einer Materialrolle la abgerollt und über Umlenkrollen 5 auf die Sauglage 4 gedrückt. Eine von einer zweiten Materialrolle für Trennlagen Ib abgerollte Trennlage 3b wird über eine Andruckrolle 7 auf die bereits mit der Trennlage 3a verbundene Sauglage 4 gelegt, und zwar auf der der Trennlage 3a gegenüberliegenden Seite. Danach werden die so zusammengelegten Lagen durch eine Anordnung von Andruckrollen bzw. durch einen Kalander geführt. Danach wird die so hergestellte saugfähige Verbundschicht auf einer Fertigrolle 8 aufgerollt, nachdem sie durch eine Messerstation geführt wurde. Je nach dem wie die Verbundschicht auf die Fertigrolle aufgerollt werden soll, ist es möglich, die Verbundschicht über eine weitere Umlenkrolle 5 zu führen und umzulenken oder unmittelbar ohne Umlenkung auf die Fertigrolle aufzurollen.

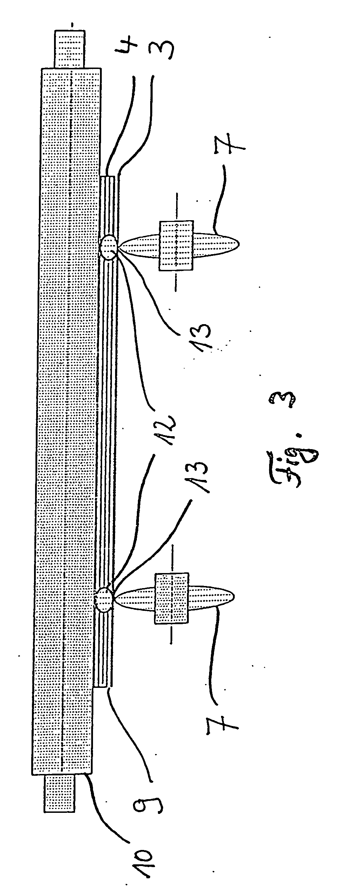

In Fig. 3 ist der Aufbau einer Andruckrolle 7 gezeigt. Dabei wird eine Verbundschicht 9 auf einer Gegenwalze 10 geführt und mit Andruckrollen 7 gegen die Gegenwalze gedrückt. In einem Andruckbereich 12 werden die Lagen der Verbundschicht 9 miteinander verpreßt. Dabei entstehen verklebte Linien 13. Die Verbundschicht 9 weist eine saugfähige Schicht als Sauglage 4 sowie eine flüssigkeitsdichte, feuchtigkeitsabweisende Trennlage 3 auf.

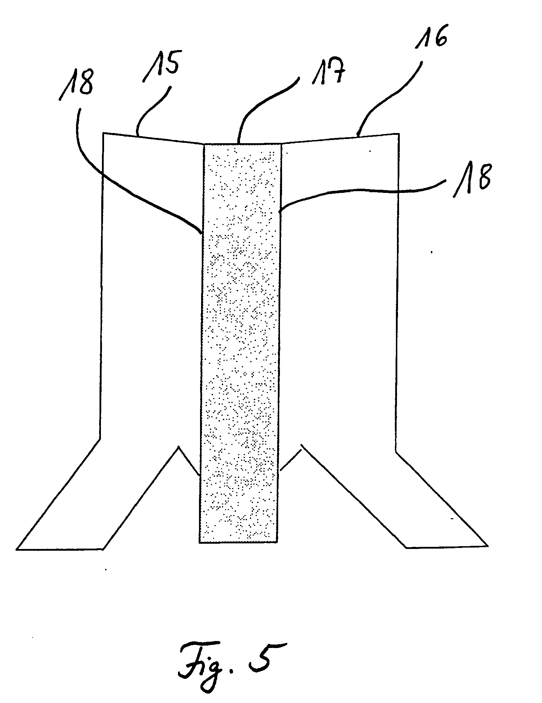

In Fig. 4 ist eine saugfähige Verbundschicht wiedergegeben, welche Linien 13 mit Klebstoff aufweist. Die Verbundschicht 9 ist aus einer Sauglage 4 und einer Trennlage 3 zusammengefügt. Die Sauglage 4 besteht aus einzelnen Schichten 14 von Zellstoffwatte. Hier nicht sichtbar ist, daß die Trennlage 3 ebenfalls schichtweise aufgebaut ist.

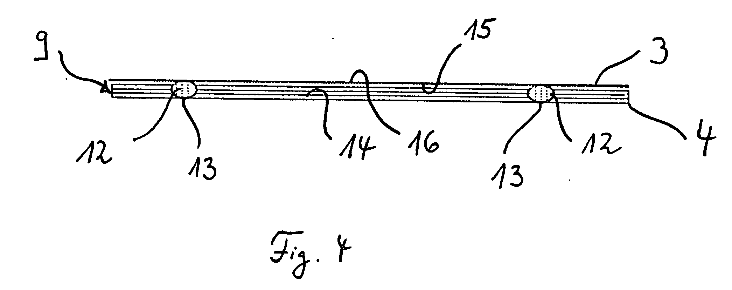

In Fig. 5 ist der schichtweise Aufbau einer Trennlage gezeigt. Die Trennlage weist eine äußere Schicht 16, eine Verbindungsschicht 15 sowie eine Farbschicht 17 auf. Der schichtweise Aufbau einer Polyethylen-Folie wird vorzugsweise durch Coextrudieren erzeugt. Hierzu werden die einzelnen Kunststoffkomponenten der jeweiligen Schicht getrennt geschmolzen und beim Blasformen zusammengefügt. Es können auch Folien eingesetzt werden, deren Schichten durch andere bekannte Verfahren hergestellt und verbunden werden. Die einzelnen Materialschichten 15, 16, 17 weisen dabei definierte Schichtgrenzen 18 auf, die miteinander, vorzugsweise durch Hitzebehandlung, verbunden werden. Die fertiggestellte Folie weist danach eine äußere Schicht 16 auf. Diese äußere Schicht dient als Auflage für Lebensmittel. Des weiteren weist die Trennlage 3 eine innere Schicht auf, welche die Verbindungsschicht 15 ist. Dazwischenliegend ist eine Farbschicht 17 angeordnet.

## Patentansprüche

1. Verfahren zur Herstellung einer saugfähigen Verbundschicht, insbesondere Verbundschicht als Unterlage für die Verpackung und/oder Aufbewahrung von Lebensmitteln, wobei in mindestens einem Fügeschritt eine vorzugsweise biegsame äußere Schicht (16) zur Anlage an das Lebensmittel, und zumindest eine Verbindungsschicht (15) zu einer Trennlage (3) verbunden werden und danach in mindestens einem Klebeschritt die Trennlage (3) mit einer zumindest eine saugfähige Schicht aufweisenden Sauglage (4) verbunden wird, **dadurch gekennzeichnet, daß** ein Dispersionskleber über eine Auftragungsanlage (19) auf die Sauglage (4) aufgetragen wird, und anschließend die Trennlage (3) und die Sauglage (4) durch Andruckrollen (7) geführt werden, so daß der Dispersionskleber an der Verbindungsschicht (15) anhaftet und die Sauglage (4) mit der Trennlage (3) verbindet.

2. Verfahren zur Herstellung einer saugfähigen Verbundschicht nach Anspruch 1, **dadurch gekennzeichnet, daß** wenigstens zwei unterschiedliche Schichten aus verschiedenen Polyethylenen miteinander zur Trennlage (3) verbunden werden.

3. Verfahren zur Herstellung einer saugfähigen Verbundschicht nach Anspruch 2, **dadurch gekennzeichnet, daß** zwischen den Schichten aus Polyethylen eine Farbschicht (17) eingebracht wird.

4. Verfahren zur Herstellung einer saugfähigen Verbundschicht nach einem der Ansprüche 2 oder 3, **dadurch gekennzeichnet, daß** die äußere Schicht (16) aus Polyethylen mit Gleit-und Antiblockmitteln vorbehandelt wird.

5. Verfahren zur Herstellung einer saugfähigen Verbundschicht nach einem oder mehreren der vorstehenden Ansprüche, **dadurch gekennzeichnet, daß** die Verbindungsschicht (15) mit einer Korona behandelt wird.

6. Verfahren zur Herstellung einer saugfähigen Verbundschicht nach einem oder mehreren der vorstehenden Ansprüche, **dadurch gekennzeichnet, daß** ein Band aus Gewebe und/oder Gewirke, vorzugsweise Zellstoffwatte in einzelne Schichten doubliert und die Schichten über Umlenkrollen zu der Sauglage (4) zusammengefügt werden.

7. Verfahren zur Herstellung einer saugfähigen Verbundschicht nach einem oder mehreren der vorstehenden Ansprüche, **dadurch gekennzeichnet, daß** die mit Klebstoff versehene Sauglage (4) auf einer Ruhestrecke (6) geführt wird, bis sich der aufgetragene Dispersionskleber in der Zellstoffwatte verteilt hat.

8. Verfahren zur Herstellung einer saugfähigen Verbundschicht nach einem oder mehreren der vorstehenden Ansprüche, **dadurch gekennzeichnet, daß** die Trennlage (3) zumindest auf einer Seite der Sauglage (4) aufgeklebt wird, wobei die Verbindungsschicht (15) der Trennlage (3) an die jeweils mit Klebstoff versehene Seite der Sauglage (4) angelegt wird.

9. Verfahren zur Herstellung einer saugfähigen Verbundschicht nach einem oder mehreren der vorstehenden Ansprüche, **dadurch gekennzeichnet, daß** die Sauglage (4) und die Trennlage (3) wasserunlöslich verbunden werden.

10. Verfahren zur Herstellung einer saugfähigen Verbundschicht nach einem oder mehreren der vorstehenden Ansprüche, **dadurch gekennzeichnet, daß** die Verbindung der Sauglage (4) und der Trennlage (3) durch kalte Prägeklebung erzeugt wird.

11. Verfahren zur Herstellung einer saugfähigen Verbundschicht nach einem oder mehreren der vorstehenden Ansprüche, **dadurch gekennzeichnet, daß** die Trenn- und Sauglagen (3, 4) miteinander durch punkt- und/oder linienförmige Prägung (13) verbunden werden.

## Claims

1. A method for manufacturing an absorbent composite layer, in particular a composite layer as an underlay for packaging and/or storing of foodstuffs, in which case in at least one joining step a preferably flexible outer layer (16) for lying against the food product and at least one connecting layer (15) are connected to form a separation layer (3) and, subsequently, in at least one gluing step said separation layer (3) is connected to an absorbent layer (4) comprising at least one absorbent sheet, **characterized in that** a dispersion adhesive is applied to said absorbent layer (4) by means of an application machine (19), and, subsequently, said separation layer (3) and said absorbent layer (4) are fed through pressure rollers (7) so that said dispersion adhesive adheres to said connecting layer (15) and connects said absorbent layer (4) with said separation layer (3).

2. A method for manufacturing an absorbent composite layer according to claim 1, **characterized in that** at least two different layers of different polyethylenes are connected to one another to form said separation layer (3).

3. A method for manufacturing an absorbent composite layer according to claim 2, **characterized in that** a colour layer (17) is placed between said layers of polyethylene.

4. A method for manufacturing an absorbent composite layer according to any of claims 2 or 3, **characterized in that** said outer layer (16) of polyethylene is pretreated with lubricant and anti-blocking agents.

5. A method for manufacturing an absorbent composite layer according to any or several of the preceding claims, **characterized in that** said connecting layer (15) is treated with a corona.

6. A method for manufacturing an absorbent composite layer according to any or several of the preceding claims, **characterized in that** a ribbon of fabric and/or interlaced yarns, preferably cellulose wadding, is doubled to form individual layers and said layers are joined by means of deflection rollers to form said absorbent layer (4).

7. A method for manufacturing an absorbent composite layer according to any or several of the preceding claims, **characterized in that** said absorbent layer (4) provided with adhesive is carried on a resting line (6) until said dispersion adhesive that was applied has spread through the cellulose wadding.

8. A method for manufacturing an absorbent composite layer according to any or several of the preceding claims, **characterized in that** said separation layer (3) is glued onto at least one side of said absorbent layer (4) with said connecting layer (15) of said separation layer (3) being laid in each case against the side of said absorbent layer (4) provided with adhesive.

9. A method for manufacturing an absorbent composite layer according to any or several of the preceding claims, **characterized in that** said absorbent layer (4) and said separation layer (3) are connected to one another in an water-insoluble manner.

10. A method for manufacturing an absorbent composite layer according to any or several of the preceding claims, **characterized in that** the bond of said absorbent layer (4) and said separation layer (3) is effected by means of cold bonding through embossing.

11. A method for manufacturing an absorbent composite layer according to any or several of the preceding claims, **characterized in that** said separation and absorbent layers (3, 4) are connected to one another by point-wise and/or line-wise embossing (13).

## Revendications

1. Procédé de fabrication d'une couche composite absorbante, en particulier une couche composite en tant que support pour l'emballage et/ou la conservation de produits alimentaires, dans lequel, au cours d'au moins une étape d'assemblage, une couche extérieure de préférence flexible (16) destinée à être placée sur le produit alimentaire, et au moins une couche d'assemblage (15) sont assemblées en une feuille de séparation (3) et ensuite, dans au moins une étape de collage, la feuille de séparation (3) est assemblée avec une feuille d'absorption (4) présentant au moins une couche absorbante, **caractérisé en ce qu'**une colle à dispersion est appliquée au moyen d'un appareil d'application (19) sur la feuille d'absorption (4) et ensuite la feuille de séparation (3) et la feuille d'absorption (4) sont guidées par des rouleaux de pression (7), de telle sorte que la colle à dispersion adhère à la couche d'assemblage (15) et assemble la feuille d'absorption (4) avec la feuille de séparation (3).

2. Procédé de fabrication d'une couche composite absorbante selon la revendication 1, **caractérisé en ce qu'**au moins deux couches différentes de polyéthylènes différents sont assemblées l'une avec l'autre pour former la feuille de séparation (3).

3. Procédé de fabrication d'une couche composite absorbante selon la revendication 2, **caractérisé en ce qu'**une couche colorée (17) est insérée entre les couches en polyéthylène.

4. Procédé de fabrication d'une couche composite absorbante selon l'une quelconque des revendications 2 ou 3, **caractérisé en ce que** la couche extérieure (16) en polyéthylène est prétraitée avec des agents lubrifiants et anti-blocage.

5. Procédé de fabrication d'une couche composite absorbante selon l'une quelconque ou plusieurs des revendications précédentes, **caractérisé en ce que** la couche d'assemblage (15) est soumise à un traitement par effet couronne.

6. Procédé de fabrication d'une couche composite absorbante selon l'une quelconque ou plusieurs des revendications précédentes, **caractérisé en ce qu'**une bande de tissu et/ou de tricot, de préférence de la ouate de cellulose, est doublée en couches individuelles, et les couches sont assemblées au moyen de rouleaux déflecteurs pour former la feuille d'absorption (4).

7. Procédé de fabrication d'une couche composite absorbante selon l'une quelconque ou plusieurs des revendications précédentes, **caractérisé en ce que** la feuille d'absorption (4) revêtue de colle est guidée sur une ligne de repos (6) jusqu'à ce que la colle à dispersion appliquée se soit répartie dans la ouate de cellulose.

8. Procédé de fabrication d'une couche composite absorbante selon l'une quelconque ou plusieurs des revendications précédentes, **caractérisé en ce que** la feuille de séparation (3) est collée au moins sur un côté de la feuille d'absorption (4), la couche d'assemblage (15) de la feuille de séparation (3) se trouvant placée contre le côté pourvu de colle de la feuille d'absorption (4).

9. Procédé de fabrication d'une couche composite absorbante selon l'une quelconque ou plusieurs des revendications précédentes, **caractérisé en ce que** la feuille d'absorption (4) et la feuille de séparation (3) sont assemblées de manière à être insolubles dans l'eau.

10. Procédé de fabrication d'une couche composite absorbante selon l'une quelconque ou plusieurs des revendications précédentes, **caractérisé en ce que** l'assemblage de la feuille d'absorption (4) et de la feuille de séparation (3) s'effectue au moyen du collage par estampage.

11. Procédé de fabrication d'une couche composite absorbante selon l'une quelconque ou plusieurs des revendications précédentes, **caractérisé en ce que** les feuilles de séparation et d'absorption (3,4) sont assemblées l'une avec l'autre par estampage en forme de points et/ou de lignes (13).
